# EUROPEAN PATENT SPECIFICATION

(11) **EP 0 354 026 B1**
(45) Date of publication and mention of the grant of the patent: **03.01.1996**
(21) Application number: 89307881.6
(22) Date of filing: 03.08.1989
(51) Int. Cl.: G06T 17/10

(54) **Three-dimensional display of tomographic data**
Dreidimensionale Anzeige tomographischer Daten
Affichage en trois dimensions de données tomographiques

(30) Priority: 04.08.1988 US 228404; 04.08.1988 US 228891
(43) Date of publication of application: 07.02.1990
(73) Proprietor: GENERAL ELECTRIC COMPANY, Schenectady, NY 12345 (US)
(72) Inventor: Crawford, Carl Ross, Milwaukee Wisconsin 53211 (US)
(74) Representative: Greenwood, John David

(56) References cited:
- EP-A- 0 016 651
- US-A- 4 751 643
- COMPUTER GRAPHICS AND IMAGE PROCESSING. vol. 18, no. 3, March 1982, NEW YORK US pages 213 - 235; UDUPA: 'INTERACTIVE SEGMENTATION AND BOUNDARY SURFACE FORMATION FOR 3-D DIGITAL IMAGES'
- INTERNATIONAL CONFERENCE ON ACOUSTICS, SPEECH AND SIGNAL PROCESSING, 1988, NEW-YORK US pages 952 - 955; ACHARIA AND LAURETTE: 'MATHEMATICAL MORPHOLOGY FOR 3D ANALYSIS'

## Description

The present invention relates in general to three-dimensional (3-D) display of tomographic data.

Tomographic medical imaging employs the collection of data representing cross sections of a body. A plurality of object interrogations can be processed mathematically to produce representations of contiguous cross-sectional images. Such cross-sectional images are of great value to the medical diagnostician in a non-invasive investigation of internal body structure. Techniques employed to collect the data are, for example, x-ray computed tomography (CT), nuclear magnetic resonance imaging (MR), single photon emission tomography, positron emission tomography, or ultrasound tomography.

A body to be imaged exists in three dimensions. Tomographic devices process data for presentation as a series of contiguous cross-sectional slices along selectable axes through the body. Each cross-sectional slice is made up of a number of rows and columns of voxels (parallelepiped volumes with certain faces corresponding to pixel spacing within each slice and others corresponding to slice spacing), each represented by a digitally stored number related to a computed signal intensity in the voxel. In practice, an array of, for example, 64 slices may each contain 512 by 512 voxels. In normal use, a diagnostician reviews images of a number of individual slices to derive the desired information. In cases where information about a surface within the body is desired, the diagnostician relies on inferences of the 3-D nature of the object derived from interrogating the cross-sectional slices. At times, it is difficult or impossible to attain the required inference from reviewing contiguous slices. In such cases, a synthesized 3-D image is desired.

Synthesizing a 3-D image from tomographic data is a two-step process. In the first step, a mathematical description of the desired object is extracted from the tomographic data. In the second step, the image is synthesized from the mathematical description.

Dealing with the second step first, assuming that a surface description can be synthesized from knowledge of the slices, the key is to go from the surface to the 3-D image. The mathematical description of the object is made up of the union of a large number of surface elements (SURFELS). The SURFELS are operated on by conventional computer graphics software, having its genesis in computer-aided design and computer-aided manufacturing, to apply surface shading to objects to aid in image interpretation through a synthesized two-dimensional image. The computer graphics software projects the SURFELS onto a rasterized image and determines which pixels of the rasterized image are turned on, and with what intensity or color. Generally, the shading is lightest (i.e., most intense) for image elements having surface normals along an operator-selected line of sight and successively darker for those elements inclined to the line of sight. Image elements having surface normals inclined more than 90 degrees from the selected line of sight are hidden in a 3-D object and are supressed from the display. Foreground objects on the line of sight hide background objects. The shading gives a realistic illusion of three dimensions.

Returning now to the first step of extracting a mathematical description of the desired surface from the tomographic slice data, this step is broken down into two substeps, namely the extraction (i.e., identification) of the object from the rest of the tomographic data, and the fitting of a surface to the extracted object. A surface is fitted to the object by giving a mathematical description to the boundary between the voxels of the object and any non-object voxels. The description can be obtained using the marching cubes, dividing cubes, or cuberille methods, for example. The dividing cubes method is described in U.S. Patent No. 4,719,585, issued to Cline et al. on January 12, 1988, which is incorporated by reference.

In the dividing cubes method, the surface of interest is represented by the union of a large number of directed points. The directed points are obtained by considering in turn each set of eight cubically adjacent voxels in the data base of contiguous slices. Gradient values are calculated for the cube vertices using difference equations. Each large cube formed in this manner is tested to determine whether the object boundary passes through it. One way to perform this test is to compare the density (i.e., intensity value) at each vertex with a threshold value (or a range between two threshold values) defining the object. If some densities are greater and some less than the threshold (or some within the range and some not), then the surface passes through the large cube. This process will be referred to as thresholding whether using a single threshold or a range (e.g., upper and lower thresholds).

In the event that the surface passes through the large cube, then the cube is subdivided to form a number of smaller cubes, referred to as subcubes or subvoxels. By interpolation of the adjacent point densities and gradient values, densities are calculated for the subcube vertices and a gradient is calculated for the center of the subcube. The densities are tested (e.g., compared to the threshold). If the surface passes through a subcube, then the location of the subcube is output with its normalized gradient, as a directed point. The union of all directed points generated by testing all subcubes within large cubes through which the surface passes, provides the surface representation. The directed points are then rendered (i.e., rasterized) for display on a CRT, for example.

In general, the thresholding method works very well when the voxels corresponding to an object-of-interest are substantially the only ones in the tomographic data that fall within the particular thresholding range (i.e., are the only occupants of the particular neighborhood in the image histogram). This is true of bone in CT and blood vessels in MR, for example. However, many potential objects-of-interest within a body share a density range (or other identifying property), such as various organs in CT measurements. Thresholding alone cannot distinguish between such objects in the same range or having the same property.

A method known as connectivity can be used to separate objects that occupy the same neighborhood in a histogram. In using connectivity, only voxels connected to a user-identified seed voxel in the object-of-interest will be considered during the surface extraction step. A voxel is connected to the seed if and only if (1) the voxel is a neighbor (i.e., adjacent to, in a predefined direction) of the seed or a neighbor of another connected voxel, and (2) the voxel shares a specified property (e.g., falling within the same threshold range) with the seed voxel. Connectivity has been successfully used in generating 3-D CT images of soft tissue structures such as the knee ligaments.

A particular problem encountered with the connectivity method is the possibility of leaks. Consider, for example, the application of connectivity to a tomographic set of 2-D images in which two objects need to be separated which are in close proximity. Because of system imperfections such as finite bandwidth, partial volume, field inhomogeneities and additive noise, a small bridge might exist between the two objects making it possible that the connectivity algorithm might leak from one object to the other and cause the two objects to be considered as one.

Several methods have been proposed to prevent leaks. One method is to have a user manually identify bridges before the connectivity algorithm is applied. This method is tedious and difficult to apply for inter-slice bridges. Another method is to circumscribe the object-of-interest with a user-defined bounding volume like a rectangular parallelepiped. This method does not work well for irregularly shaped objects (e.g., most internal organs). Another method operates by redefining the criteria for being connected. Thus, by specifying that a certain number of voxels have to overlap before they are considered to be neighbors, certain types of leaks can be plugged.

Connectivity begins with a seed voxel in the object-of-interest or with a number of seed voxels in multiple objects-of-interest. Each voxel connected to a seed is marked or flagged. During surface extraction, only voxels that are marked and that satisfy the threshold criterion will be considered.

If the number of objects-of-interest to be viewed is large, then a large number of seeds will be required. For example, it may be desirable to generate a 3-D view of ankle bones where the ankle is surrounded by a cast. Since a cast in a CT exam has approximately the same density value as bone, it is necessary to separate the ankle bones from the cast using connectivity. However, due to the large number of separate bones in the ankle, an undesirably large amount of user interaction is required to manually specify seed voxels for all separate bones.

In another example, a large number of seed voxels need to be specified in multiple portions of the hip bones in order to obtain a 3-D view of the hip with the femur bone removed. Likewise, many seed voxels are required to extract a 3-D surface of the brain without including surrounding fat and ligaments. In each of these cases, the user spends a great deal of time and effort in specifying all the required seed voxels, thereby reducing the efficiency of the user and the imaging system.

Once a 3-D image is displayed of multiple objects-of-interest, the user may be interested in displaying a subset of the displayed objects. Prior-art systems required re-specification to identify seed voxels in the objects to be displayed, which can also be time consuming.

Other proposals for dealing with the problem of the connectivity method have been devised:-
EP-A-0016651 provides a method and apparatus for classifying areas on a raster type display unit. It is used to identify areas defined by a predetermined closed boundary operating by detecting connectivity with a selected seed point inside or outside an object-of-interest which connectivity does not include a boundary point.

US-A-471643 provides a method and apparatus for determining connected substructures in a body. Three dimensional regions exhibiting the same tissue type are similarly labelled. From this label information together with a seed location of the substructure of interest, all similarly labelled connected data points are determined. A subset of the original data is then provided to a display processor.

In Computer Graphics and Image Processing, Vol. 18, No. 3, March 1982 New York, US, pages 213-235 is described an interactive technique which permits isolation of arbitrary subregions of a 3-D image where object and non-object regions touch or overlap. In one version, digitized contours are used. A 3-D binary image is created by filling in the region represented by the contours and a tracking algorithm is applied to the binary image to produce a specified boundary surface of the object. Alternatively the boundary surface information is produced directly from the contour data.

None of the prior art methods are satisfactory for wide-spread application to medical images because each either fails in certain circumstances or is difficult and inconvenient to implement. The prior art methods can be combined empirically to plug leaks in a wider class of cases. However, there still exist cases where the methods fail individually or collectively.

The invention seeks to provide a method and apparatus for generating a three-dimensional surface definition of an object-of-interest within a three-dimensional tomographic data set in which the disadvantages of the prior art are obviated or reduced.

More specifically, the invention, in its specific embodiments, seeks to use connectivity to remove unwanted objects or leaks and then to identify multiple objects-of-interest using ranging.

The invention is achieved according to a method for generating a three-dimensional surface definition of an object or multiple objects of interest within a three-dimensional tomographic data set including a plurality of voxel data points. Each voxel has a respective density vaIue and the multiple objects include voxels having density values satisfying a predetermined property. The term "density value" is used here in its broad sense of any characteristic being measured of an object, such as x-ray attenuation, nuclear spin relaxation, or ultrasound backscatter coefficient, for example. The method according to the invention is set out in claim 1.

In another aspect of the invention, apparatus as defined in claim 8 is provided having seed means to specify non-object seed voxels or object and non-object seed voxels.The term "modify" is used to indicate either that the voxel value is actually changed or that a flag or a mark is altered or appended to the value. If a flag is used, then a flag test will be incorporated into the neighbor criterion in subsequent steps. The predetermined property can be any characteristic which defines a collection of voxels within the data set.

### Brief Description of the Drawings

The invention will now be described in greater detail, by way of example, with reference to the drawings, in which:-
FIGURE 1 represents a portion of an array of tomographic data from which a surface is to be extracted.
FIGURE 2 is a two-dimensional tomographic slice of an ankle in a cast taken in a sagittal plane.
FIGURE 3 is a histogram corresponding to a tomographic data set including the slice of Figure 2.
FIGURES 4, 5, and 6 are two-dimensional tomographic slices showing cranial ventricles which are exaggerated to show a leaking problem and its solution according to the invention.
FIGURE 7 is a histogram corresponding to the tomographic data set of Figures 4-6.
FIGURE 8 is a flow chart of an embodiment of a method according to the invention.
FIGURE 9 is a flow chart of a preferred method according to the invention.
FIGURE 10 is an anatomical diagram showing a further example of the invention.
FIGURE 11 is a block diagram of an apparatus according to the invention.

### Detailed Description of the Invention

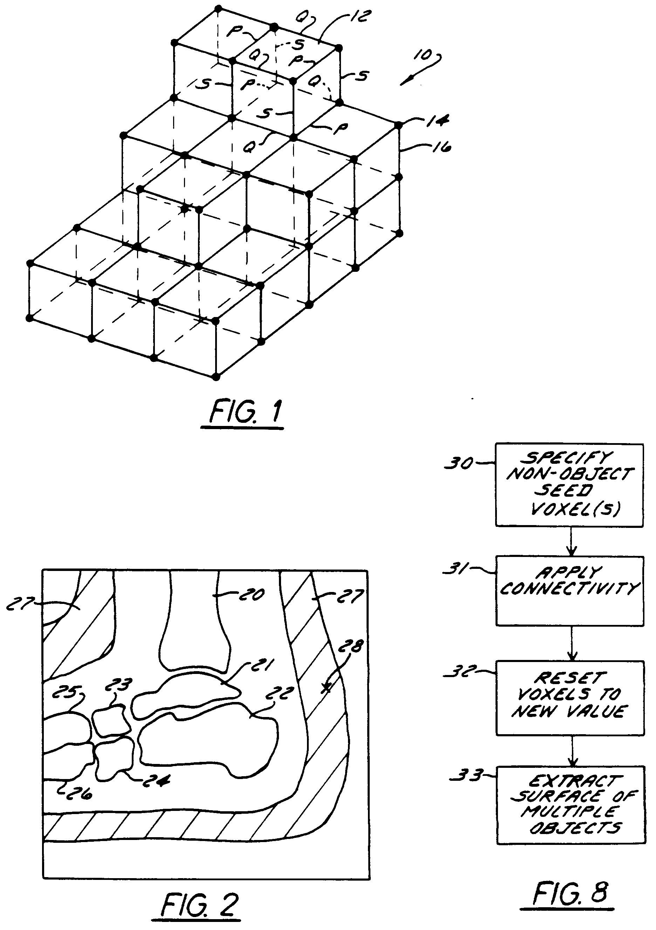

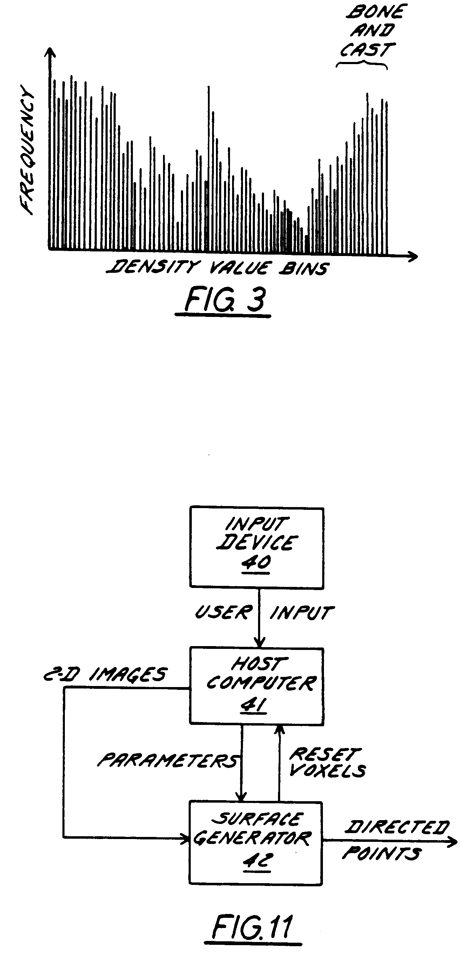

Referring to Figure 1, there is shown, generally at 10, part of a tomographic data set including an array of cubes defined by nodes 14 connected by edges 16. Each node 14 represents a signal amplitude of a voxel of tomographic data and each edge 16 represents the distance from one voxel to its neighbor. Although the volumes described are referred to as cubes, edges 16 are not necessarily all of equal length and are probably not since slice thickness is usually not equal to pixel resolution within the slice. Pixel spacings P and Q and slice spacing S are shown for cube 12.

A tomographic imaging system typically acquires data in the form of two-dimensional slices. An example of such a slice is shown in Figure 2 which represents a CT image of a sagittal plane of an ankle including the bones of the tibia 20, the talus 21,the calcaneus 22, the cuboid 23, the navicular 24, and cuneiforms 25 and 26 surrounded by a cast 27 applied to the ankle of a patient. A plurality of spaced slices covering a volume of interest (e.g., the entire foot of the patient) make up a tomographic data set of which Figure 2 represents one slice. The slice shown in Figure 2 is at an angle not normally employed in imaging an ankle, but is being used to more clearly illustrate the invention.

Consider, for example, the problem of generating a 3-D image of the bones of the ankle. This requires the extraction of a surface definition of the multiple objects-of-interest from the tomographic data set. In this example, connectivity is needed because prior-art thresholding cannot distinguish between cast 27 and the bones of interest. Referring to Figure 3, an image histogram of the tomographic data set plots density values versus frequency (i.e., the number of voxels having each particular density value) in a plurality of bins. The use of thresholding to extract a surface definition of bone without the cast will not work since bone and cast share the same bins at the upper end of the histogram.

Prior-art connectivity methods prove to be inconvenient and unmanageable in the present example due to the large number of seed voxels that need to be specified so that all of the ankle bones will be included (other bones of the ankle would be shown only in other slices, making it necessary to examine a large number of slices when placing seed voxels). The manual specification of the seed voxels therefore requires an unacceptable amount of user interaction in this example.

Briefly, according to the present embodiment of the invention, instead of marking voxels corresponding to the desired, multiple objects, the voxels belonging to the unwanted objects in the thresholding range (i.e., histogram bins) are modified to a value that will fail the thresholding criterion of the desired objects. Having removed any unwanted objects, a single application of thresholding will result in extraction of the multiple objects-of-interest.

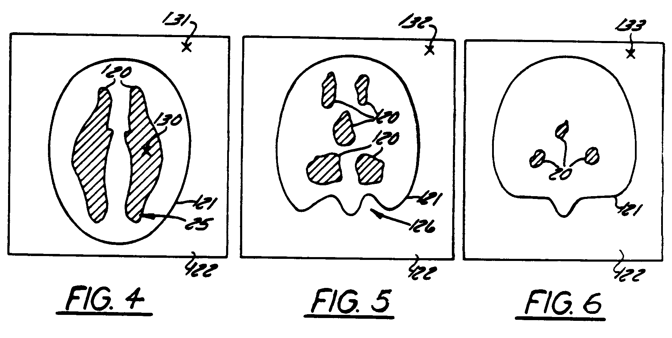

Figures 4-6 represent slice images obtained by x-ray computed tomography (CT) of a head. The images are simplified by showing only cranial ventricles 120, bone 121, and air 122. By exaggerating slice thickness and slice spacing, the images will be considered to be adjacent slices in order to more clearly illustrate the problem of leaking during application of connectivity.

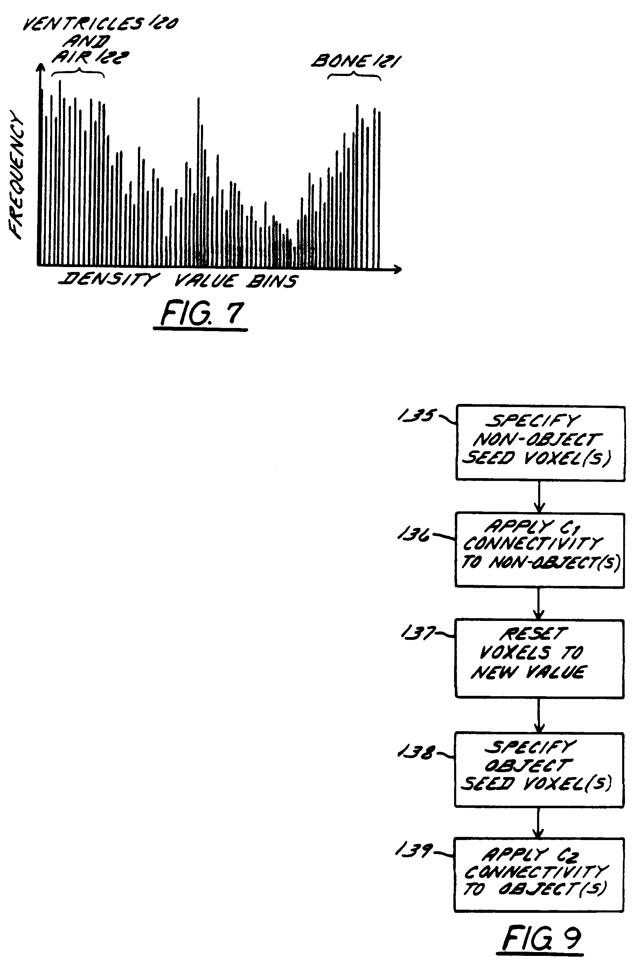

In the present example, it is desired to construct a 3-D image of cranial ventricIes 120. Figures 4-6 are transverse sections approximateIy at the level of the forehead, eyes, and upper nose, respectively. Referring to Figure 7, an image histogram of the slices plots density values versus frequency (i.e., number of voxels having each particular density value) in a plurality of bins. The use of thresholding to extract bone from the data works well because bone 121 is substantially the only constituent of the bins at the upper end of the histogram. However, thresholding will not work for cranial ventricles since ventricles 120 and air 122 share the lower end of the histogram. Therefore, connectivity must be used to separate the ventricles from the air.

Prior-art connectivity methods will fail to separate ventricles 120 and air I22 because of a leak from ventricles 120 into air 122 in the form of an inter-slice bridge near the orbits (i.e., eye sockets). Thus, although on each two-dimensional slice the ventricles and air are unconnected, because of the need for a finite number of slices there exists a bridge in the third dimension between the ventricles at 125 and the air at 126. The bridge causes connectivity of the ventricles to leak into the air. Having once leaked into air, the three-dimensional connectivity of the ventricIes grows to include the air in all of the slices. The ventricles are then obscured in the final 3-D image by the air.

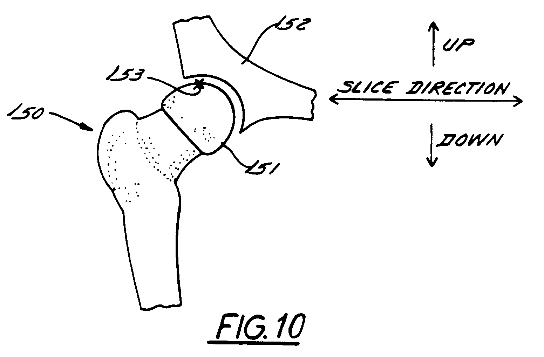

A method according to an embodiment of the invention is summarized in Fig.8, in which one or more non-object seed voxels are specified (e.g., by a user) in step 30. In the example of Fig. 2, this is accomplished by specifying a seed voxel 2B anywhere in cast 27. It is necessary to specify a seed in only one of the portions of cast 27 shown in Fig. 2 since the remaining portion will be connected through other slices.

Returning to Fig. 8, connectivity is applied to the seed voxel(s) in step 31. The criterion for connectivity preferably takes the form of a range (e.g., of density values or other property) and a definition of potential neighbors to be checked for satisfying the range (e.g., any voxels sharing a face, and edge or a vertex). In step 32, all voxels satisfying connectivity to the seed voxel(s) are reset or modified to a new value so that they no longer share the same histogram neighborhood with the objects-of--interest.

Alternatively, the voxels could be flagged. Continuing with the example of Fig. 2, the cast voxel values can be modified to a value at the low end of the histogram (e.g., the value of air), so long as the new value is outside the range for bone. Lastly, a surface definition of the multiple objects is extracted in step 33.Preferably, step 33 is performed using a thresholding criterion since all unwanted objects are now outside of the threshold range for the desired objects. If the cast voxels were flagged instead of changed, then the thresholding criterion should ignore flagged voxels.

Additional advantage may be obtained according to la further preferred embodiment of the invention for interactively removing selected objects from a 3-D image. For example, after viewing a 3-D image of the ankle of Fig. 2, a user may desire to delete the cuboid and. navicular bones in order to better visualize the calcaneous bone. The present invention can be used as an electronic scalpel to excise the unwanted objects by specifying appropriate seed voxels, applying connectivity, and modifying the connected voxels. Re-extracting the surface definition then gives the desired image.

A method according to an embodiment of the invention for preventing leaks is summarized in Figure 9. The method modifies the voxel values of each non-object to which undesired bridges might occur. The term "modify" is used herein to indicate either that the voxel value is actually changed or that a flag or a mark is altered or appended to the value. If a flag is used, then a flag test will be incorporated into the neighbor criterion in subsequent steps.

Voxel modification is accomplished by applying connectivity to the unwanted objects. Any voxel identified in this step of connectivity is given a modified value that will not satisfy the connectivity criterion when connectivity is applied to the object-of-interest. A further aspect of the method is that the criteria for connectivity of the unwanted (non-object) voxels and the object voxels are different.

Referring now to Figure 9, One or more non-object seed voxels are specified (e.g., by a user) in step 135. In step 136, connectivity is applied to the non-object(s) according to a first connectivity criterion Cl which can be user-specified. In step 137, all voxels marked as connected during step 136 are reset to a new value so that they no longer share the histogram neighborhood with the object-of-interest. One or more object seed voxels are specified in step 138. In step 139, connectivity is applied to the object(s) according to a second connectivity criterion C2' different from first criterion Cl.

The connectivity criteria preferably each take the form of a range (e.g., density values or other property )and a definition of potential neighbors to be checked for satisfying the range. The present embodiment is particularly advantageous in the example of Figures 4-6 where the leaks occur along one particular dimension. Cl can then be specified as a criterion not involving that particular dimension so that the non-object can be removed without leakage. Then C2 can be specified as a three-dimensional criterion. This allows growth of ventricle 120 from a single object seed voxel I30 (Figure 4) which is easily specified by the user. Although Cl is two-dimensional and requires a non-object seed voxel 131, 132, and 133 (Figures 4-6) in the air of each slice, this is easily accomplished by the user in a single operation since there is a single corresponding position in each slice which contains air 122.

A further example of the invention will be described with reference to Figure 10 which shows a femur bone 150 and the femoral head 151 received in the acetabulum 152 (hip socket). Since head 151 and acetabulum 152 occupy the same neighborhood of the image histogram, connectivity is required in order to extract a surface definition of acetabulum 152. However, prior-art connectivity methods will fall due to interslice bridges between head 151 and acetabulum 152.

According to this example a non-object seed voxel 153 is specified at the uppermost point in head 151. since no voxel in acetabulum 152 is below any voxel in head 151 or femur 150, a three-dimensional criterion C₁ can be specified anisotropically by excluding neighbor voxels in the up direction (i.e., potential connected neighbors are in the same slice as or in the slice below a particular voxel). Thus, connectivity will grow from seed 153 to include head 151 but will not bridge or leak into acetabulum 152 since connectivity cannot go up. The femur and femoral head voxels identified by C₁ are set to a value outside of the range for bone. To eliminate all femoral voxels, a seed is then specified anywhere in acetabulum 152 and three-dimensional connectivity applied to that seed. In the embodiment of Figure 10, it may sometimes be desirable to rotate the tomographic data set in order to favorably position the object and non-object.

A preferred apparatus of the present invention is shown in Figure 11 which Is an improvement of apparatus shown in co-pending application EP-A-318293 (US Serial No. 125, 426, filed November 25, 1987). A host computer 41 receives image data from a data acquisition system (not shown). Two-dimensional tomographic images are supplied to a surface generator 42 from computer 41. An input device 40, such as a keyboard, trackball, or mouse, supplies user input including seed voxel locations and criterion definitions to computer 41. Parameters such as seed voxel and criterion specifications, interpolation factors for performing the dividing cubes method, and other 3-D image specifications, are provided from computer 41 to surface generator 42. Both connectivity and surface extraction are preferably performed in surface generator 42. The locations of voxels determined to be reset during connectivity objects are provided from generator 42 to computer 41. After surface extraction, a plurality of directed points are provided from generator 42 to image rendering apparatus (not shown).

while preferred embodiments of the invention have been shown and described herein, it will be understood that such embodiments are provided by way of example only.

## Claims

1. A method for generating a three-dimensional surface definition of an object-of-interest within a three-dimensional tomographic data set including a plurality of voxel data points, each voxel having a respective density value wherein each object-of-interest and non-object-of-interest including voxels having density values satisfying a predetermined property, characterized by:
identifying at least one object-of-interest seed voxel (138) and at least one non-object seed voxel (30,135) not in the object-of-interest, the voxels (130,135,138) having a density value satisfying the property, wherein the density values are a range of density values which satisfy the property;
applying connectivity (31,136) to the non-object seed voxel (30,135) according to a first criterion C₁;
modifying (32,137) the density value of each voxel (30,135) satisfying connectivity according to C₁ to provide a value not satisfying the predetermined property;
applying connectivity (139) to the object-of-interest seed voxel (138) according to a second criterion C₂, where C₁ is not equal to C₂; and
extracting (39) a surface definition of the object-of-interest according to a threshold for defining the object-of-interest within the range of density values which continue to satisfy the predetermined property after the modifying step has been completed.

2. The method of claim 1 wherein the object-of-interest is a multiple object and the extracting step includes thresholding for defining multiple objects within the range of density values, whereby the three-dimensional surface definition of the multiple objects is generated without specifying seed voxels in the multiple objects.

3. The method of claims 1 or 2 comprising the step of, prior to the identifying step, viewing a three-dimensional image corresponding to the tomographic data set; and
selecting non-objects-of-interest to be removed.

4. The method of claim 1 wherein C₁ defines a neighbor of a voxel differently than C₂.

5. The method of claim 1 wherein C₁ is anisotropic and wherein C₂ defines a three-dimensional connectivity.

6. The method of claim 1 wherein C₁ defines a two-dimensional connectivity and C₂ defines a three-dimensional connectivity.

7. The method of any preceding claim wherein modifying the density value of each voxel of the non-object-of-interest satisfying connectivity comprises changing the value of the voxel or changing a flag associated with the voxel or operating a flag to the voxel.

8. Apparatus for generating a three-dimensional surface definition of an object-of-interest within a three-dimensional tomographic data set including a plurality of voxel data points, each voxel having a respective density value wherein each object-of-interest and non-object-of-interest including voxels having density values **satisfying a predetermined property, characterized by**:
seed means (30, 135, 138) for identifying at least one object-of-interest seed voxel and at least one non-object-of-interest seed voxel, the voxels having a density value satisfying the property, wherein the density values are a range of density values which satisfy the property;
connectivity means (31, 136) coupled to non-object seed voxel for applying connectivity according to a first criterion C₁;
modifying means (32, 137) coupled to the connectivity means for modifying the density value of each voxel satisfying connectivity according to C₁ to provide a value not satisfying the predetermined property;
connectivity means (139) coupled to the object-of-interest seed voxel for applying connectivity according to a second criterion C₂, where C₁ is not equal to C₂; and
extracting means (33) for extracting a surface definition of the object-of-interest according to a threshold for defining the object-of-interest within the range of density values which continue to satisfy the predetermined property after the density modification has been complete.

9. The apparatus of claim 8 wherein the object-of-interest is a multiple object.

10. The apparatus of claims 8 or 9 comprising range means for specifying the range of density values.

## Patentansprüche

1. Verfahren zum Generieren einer dreidimensionalen Oberflächendefinition von einem Objekt von Interesse innerhalb eines dreidimensionalen tomographischen Datensatzes, der mehrere Voxeldatenpunkte enthält, wobei jedes Voxel einen entsprechenden Dichtewert hat, wobei jedes Objekt-von-Interesse und Nicht-Objekt-von-Interesse Voxel mit Dichtewerten enthält, die einer entsprechenden Eigenschaft genügen, gekennzeichnet durch:
Identifizieren wenigstens eines des Objekt-von-Interesse-Ursprungsvoxels (138) und wenigstens eines Nicht-Objekt-Ursprungsvoxels (30, 135), das nicht in dem Objekt-von-Interesse ist, wobei die Voxel (130, 135, 138) einen Dichtewert haben, der die Eigenschaft erfüllt, wobei die Dichtewerte einen Bereich von Dichtewerten haben, der die Eigenschaft erfüllt,
Ausüben von Verbindbarkeit (31, 136) mit dem Nicht-Objekt-Ursprungsvoxel (30, 135) nach einem ersten Kriterium C₁, Modifizieren (32, 137) des Dichtewerts von jedem Voxel (30, 135), der die Verbindbarkeit gemäß C₁ erfüllt, um einen Wert zu liefern, der die vorbestimmte Eigenschaft nicht erfüllt,
Ausüben von Verbindbarkeit (139) mit dem Ursprungsvoxel (138) des Objektes-von-Interesse gemäß einem zweiten Kriterium C₂, wobei C₁ nicht gleich C₂ ist, und
Extrahieren (39) einer Oberflächendefinition des Objektes-von-Interesse gemäß einem Schwellenwert zum Definieren des Objektes-von-Interesse innerhalb des Bereiches von Dichtewerten, die die vorbestimmte Eigenschaft weiterhin erfüllen, nachdem der Modifizierungsschritt abgeschlossen worden ist.

2. Verfahren nach Anspruch 1, wobei das Objekt-von-Interesse ein Vielfachobjekt ist und der Extrahierungsschritt eine Schwellenwertbildung zur Definierung vieler Objekte innerhalb des Bereiches von Dichtewerten enthält, wobei die dreidimensionale Oberflächendefinition der Vielfachobjekte generiert wird, ohne die Ursprungsvoxel in den Vielfachobjekten zu spezifizieren.

3. Verfahren nach Anspruch 1 oder 2, wobei vor dem Identifizierungsschritt ein dreidimensionales Bild, das dem tomographischen Datensatz enspricht, betrachtet wird, und Nicht-Objekte-von-Interesse selektiert werden, die zu beseitigen sind.

4. Verfahren nach Anspruch 1, wobei C₁ einen Nachbarn von einem Voxel anders als C₂ definiert.

5. Verfahren nach Anspruch 1, wobei C₁ anisotrop ist und C₂ eine dreidimensionale Verbindbarkeit definiert.

6. Verfahren nach Anspruch 1, wobei C₁ eine zweidimensionale Verbindbarkeit definiert und C₂ eine dreidimensionale Verbindbarkeit definiert.

7. Verfahren nach einem der vorstehenden Ansprüche, wobei das Modifizieren des Dichtewertes von jedem Voxel des Nicht-Objekt-von-Interesse, das Verbindbarkeit erfüllt, enthält, daß der Wert von dem Voxel geändert wird oder eine dem Voxel zugeordnete Flagge geändert wird oder eine Flagge für das Voxel betätigt wird.

8. Einrichtung zum Generieren einer dreidimensionalen Oberflächendefinition von einem Objekt-von-Interesse in einem dreidimensionalen tomographischen Datensatz, der mehrere Voxeldatenpunkte enthält, wobei jedes Voxel einen entsprechenden Dichtewert hat, wobei jedes Objekt-von-Interesse und Nicht-Objekt-von-Interesse Voxelwerte mit Dichtewerten hat, die einer vorbestimmten Eigenschaft genügen, gekennzeichnet durch
Keim- bzw. Ursprungsmittel (30, 135, 138) zum Identifizieren von wenigstens einem Objekt-von-Interesse-Ursprungsvoxel und wenigstens einem Nicht-Objekt-von-Interesse-Ursprungsvoxel, wobei die Voxel einen Dichtewert haben, der die Eigenschaft erfüllt, wobei die Dichtewerte ein Bereich von Dichtewerten sind, die die Eigenschaft erfüllen,
Verbindbarkeitsmittel (31, 136), die mit dem Nicht-Objekt-Ursprungsvoxel in Verbindung sind zum Ausüben von Verbindbarkeit gemäß einem ersten Kriterium C1,
Modifizierungsmittel (32, 137), die mit den Verbindbarkeitsmitteln in Verbindung stehen, zum Modifizieren des Dichtewertes von jedem Voxel, das die Verbindbarkeit gemäß C₁ erfüllt, um einen Wert zu liefern, der die vorbestimmte Eigenschaft nicht erfüllt,
Verbindbarkeitsmittel (139), die mit dem Objekt-von-Interesse-Ursprungsvoxel in Verbindung sind, zum Ausüben von Verbindbarkeit gemäß einem zweiten Kriterium C₂, wobei C₁ nicht gleich C₂ ist, und
Extrahierungsmittel (33) zum Extrahieren einer Oberflächendefinition von dem Objekt-von-Interesse gemäß einem Schwellenwert zum Definieren des Objektes-von-Interesse innerhalb des Bereiches von Dichtewerten, die weiterhin die vorbestimmte Eigenschaft erfüllen, nachdem die Dichtemodifikation abgeschlossen worden ist.

9. Einrichtung nach Anspruch 8, wobei das Objekt-von-Interesse ein Vielfachobjekt ist.

10. Einrichtung nach Anspruch 8 oder 9, wobei Bereichsmittel zum Spezifizieren des Bereiches von Dichtewerten vorgesehen sind.

## Revendications

1. Procédé pour créer une définition de surface tridimensionnelle d'un objet présentant un intérêt dans un ensemble de données tomographiques tridimensionnelles contenant une pluralité de points de données de voxels, chaque voxel ayant une valeur de densité propre et sachant que chaque objet présentant un intérêt et chaque objet sans intérêt contiennent des voxels ayant des valeurs de densité qui satisfont à une propriété prédéterminée, caractérisé par :
- l'identification d'au moins un voxel-germe (138) d'un objet présentant un intérêt et d'au moins un voxel-germe (30, 135) d'un objet sans intérêt qui ne soit pas dans l'objet présentant un intérêt, les voxels (130, 135, 138) ayant une valeur de densité qui satisfait à ladite propriété, les valeurs de densité étant une plage de valeurs de densité qui satisfont à ladite propriété,
- l'application de la connectivité (31, 136) au voxel-germe (30, 135) d'un objet sans intérêt, suivant un premier critère C₁,
- la modification (32, 137) de la valeur de densité de chaque voxel (30, 135) satisfaisant à la connectivité suivant le critère C₁, pour donner une valeur ne satisfaisant pas à ladite propriété prédéterminée,
- l'application de la connectivité (139) au voxel-germe (138) d'un objet présentant un intérêt, suivant un second critère C₂, sachant que le critère C₁ n'est pas égal au critère C₂, et
- l'extraction (39) d'une définition de surface de l'objet présentant un intérêt suivant un seuil pour définir l'objet présentant un intérêt dans la gamme de valeurs de densité qui continuent à satisfaire à la propriété prédéterminée une fois que l'étape de modification est terminée.

2. Procédé selon la revendication 1, dans lequel l'objet présentant un intérêt est un objet multiple et l'étape d'extraction comprend l'application d'un seuil pour définir des objets multiples dans la gamme de valeurs de densité, de sorte que la définition de surface tridimensionnelle des objets multiples est obtenue sans spécification de voxels-germes dans les objets multiples.

3. Procédé selon la revendication 1 ou 2, comprenant, avant l'étape d'identification, une étape d'observation d'une image tridimensionnelle qui correspond à l'ensemble des données tomographiques et une étape de sélection des objets sans intérêt qui doivent être supprimés.

4. Procédé selon la revendication 1, dans lequel le critère C₁ définit un voisin d'un voxel différemment du critère C₂.

5. Procédé selon la revendication 1, dans lequel le critère C₁ est anisotrope et le critère C₂ définit une connectivité tridimensionnelle.

6. Procédé selon la revendication 1, dans lequel le critère C₁ définit une connectivité bidimensionnelle et le critère C₂ définit une connectivité tridimensionnelle.

7. Procédé selon l'une quelconque des précédentes revendications, dans lequel la modification de la valeur de densité de chaque voxel de l'objet sans intérêt qui satisfait à la connectivité comprend une modification de la valeur du voxel, une modification d'un indicateur associé au voxel ou bien la mise en place d'un indicateur pour ce voxel.

8. Appareil pour produire une définition de surface tridimensionnelle d'un objet présentant un intérêt dans un ensemble de données tomographiques tridimensionnelles contenant une pluralité de points de données de voxels, chaque voxel ayant une valeur de densité propre et sachant que chaque objet présentant un intérêt et chaque objet sans intérêt contiennent des voxels ayant des valeurs de densité qui satisfont à une propriété prédéterminée, caractérisé par :
- un moyen de définition de germe (30, 135, 138) pour identifier au moins un voxel-germe d'un objet présentant un intérêt et au moins un voxel-germe d'un objet sans intérêt, les voxels ayant une valeur de densité qui satisfait à ladite propriété, les valeurs de densité étant une plage de valeurs de densité qui satisfont à ladite propriété,
- un moyen d'application de connectivité (31, 136), couplé audit voxel-germe d'un objet sans intérêt pour lui appliquer la connectivité suivant un premier critère C₁,
- un moyen de modification (32, 137) couplé au moyen d'application de connectivité pour modifier la valeur de densité de chaque voxel qui satisfaisait à la connectivité suivant le critère C₁ afin de donner une valeur ne satisfaisant pas à la propriété prédéterminée,
- un moyen d'application de connectivité (139), couplé au voxel-germe de l'objet présentant un intérêt pour lui appliquer la connectivité suivant un second critère C₂, sachant que le critère C₁ n'est pas égal au critère C₂, et
- un moyen d'extraction (33) pour extraire une définition de surface de l'objet présentant un intérêt suivant un seuil pour définir l'objet présentant un intérêt dans la gamme de valeurs de densité qui continuent à satisfaire à la propriété prédéterminée une fois que la modification de la densité est terminée.

9. Appareil selon la revendication 8, dans lequel l'objet présentant un intérêt est un objet multiple.

10. Appareil selon la revendication 8 ou 9, comprenant un moyen de définition de gamme pour spécifier la gamme des valeurs de densité.
